# EUROPÄISCHE PATENTANMELDUNG

(11) **EP 2 014 925 A1**
(43) Veröffentlichungstag der Anmeldung: **14.01.2009**
(21) Anmeldenummer: 07112348.3
(22) Anmeldetag: 12.07.2007
(51) Int. Cl.: F04D 29/66, F01D 9/02, F02C 6/12

(54) **Diffuser für Radialverdichter**

(71) Anmelder: ABB Turbo Systems AG, 5400 Baden (CH)
(72) Erfinder: Roduner, Christian, 8050 Zürich (CH); Phillipsen, Bent, 5406 Baden-Rütihof (CH); Robinson, Douglas, 8953 Dietikon (CH)
(74) Vertreter: ABB Patent Attorneys

(57) **Zusammenfassung**

Abströmbereich eines Radialverdichters, umfassend ein in Umfangsrichtung asymmetrisch ausgebildetes Spiralgehäuse (31) sowie einen Diffusor mit mehreren, in Umfangsrichtung verteilt angeordneten Leitelementen (21), wobei sich der Winkelabstand (α₀) zweier benachbart zueinander angeordneter Leitelemente (21) unterscheidet vom Winkelabstand (α₁) zweier anderer benachbart zueinander angeordneter Leitelemente (21).

## Beschreibung

Die Erfindung bezieht sich auf das Gebiet der Abgasturbolader für aufgeladene Brennkraftmaschinen. Sie betrifft den Abströmbereich eines Radialverdichters solcher Abgasturbolader, also den Bereich eines Radialverdichters, welcher stromab des Verdichterrades angeordnet ist und in der Regel einen beschaufelten Diffusor sowie ein asymmetrisch ausgebildetes Spiralgehäuse umfasst.

In modernen Turboladern werden zur Erhöhung des Ansaugdrucks des Motors in der Regel einstufige Radialverdichter mit beschaufelten Diffusoren eingesetzt. Im Diffusor wird die kinetische Energie des zu verdichtenden Mediums in statischen Druck umgewandelt. Die Verdichterräder umfassen eine bestimmte Anzahl Laufschaufeln und die Diffusoren weisen Leitschaufeln mit prismatischen, in der Regel aerodynamischen Profilen (Keil- oder Tragflächenform) auf. In Richtung der Verdichterachse betrachtet haben die Leitschaufeln einen bestimmten tangentialen Winkel an der Eintrittskante (Eintrittswinkel), einen bestimmten tangentialen Winkel an der Austrittskante (Austrittswinkel) sowie einen bestimmten Winkelabstand in Umfangsrichtung zwischen jeweils zwei benachbart zueinander angeordneten Leitschaufeln.

Bei der Auslegung von Verdichterstufen muss stets ein Kompromiss zwischen der aerodynamischen Performance, der mechanischen Auslastung und der Lärmbildung durch den Verdichter gefunden werden. Moderne Verdichterstufen mit hohen spezifischen Schluckvermögen haben lange, dünne Laufschaufeln, deren Eigenformen bei niedrigen Frequenzen auftreten und sich leicht anregen und in Schwingung versetzen lassen. Eine Hauptquelle dieser Anregungen ist ein durch die Leitschaufeln des Diffusors erzeugtes Druckpotenzialfeld. Aufgrund der geometrisch regelmässig ausgebildeten Verdichterlauf- und Diffusorleitschaufeln kann es zu Resonanzschwingungen kommen, die mit erhöhter Schwingungsenergie wirksam werden. Aufgrund der für das Erreichen eines guten Wirkungsgrades erforderlichen hohen Drehzahlen können die Schwingungen im Extremfall in den Verdichterlaufschaufeln zu mechanischen Schäden führen (high cycle fatigue - HCF).

### Stand der Technik

EP 1 772 596 offenbart einen zweistufigen Diffusor eines Axialverdichters, bei welchem je eine Diffusorschaufelreihe vor und nach den axial durchströmten Laufschaufeln des Verdichters angeordnet sind. Die Diffusorschaufelreihen weisen je in einer unteren und einer oberen Hälfte eine unterschiedliche Anzahl Leitschaufeln auf, um durch die ungleiche Schaufeldichte den Schwingungseinfluss auf die zwischen den Diffusorschaufelreihen angeordneten Laufschaufeln zu reduzieren. Die Durchströmung erfolgt in axialer Richtung, wobei die Strömungsverhältnisse vor und nach dem dargestellten, zweistufigen Diffusor entlang dem Umfang symmetrisch sind. Solche symmetrischen Strömungsverhältnisse sind erforderlich, da axial stromab des Diffusors die Axialturbine angeordnet ist, welcher eine entlang dem Umfang möglichst symmetrische Strömung zugeführt werden soll.

### Kurze Darstellung der Erfindung

Die Aufgabe der vorliegenden Erfindung besteht darin, den Abströmbereich eines Radialverdichter dahingehend zu verbessern, dass der Diffusor im Zusammenspiel mit dem stromab der Leitschaufeln des Diffusors angeordneten, asymmetrisch ausgebildeten Spiralgehäuse sowie den Laufschaufeln des Radialverdichterrades möglichst geringe Resonanzschwingungen hervorbringt.

Erfindungsgemäss wird dies erreicht, indem die Winkelabstände zwischen zwei benachbart angeordneten Leitschaufeln des Diffusors variieren.

Dabei können in einer Ausführungsform einzelne Leitschaufelpaare einen von den übrigen Leitschaufelpaaren abweichenden Winkelabstand aufweisen.

Optional können in einer weiteren Ausführungsform mehrere nebeneinander, oder regelmässig oder unregelmässig entlang dem Umfang verteilt angeordnete Leitschaufelpaare jeweils den gleichen aber vom Winkelabstand der restlichen Leitschaufelpaar verschiedenen Winkelabstand aufweisen.

Optional können in einer weiteren Ausführungsform mehrere Gruppen von Leitschaufelpaaren jeweils den gleichen Winkelabstand aufweisen. Diese die Leitschaufelpaare solcher Gruppen können aneinander angrenzend oder über den Umfang verteilt angeordnet sein.

Optional können in einer weiteren Ausführungsform alle Leitschaufelpaare einen unterschiedlichen Winkelabstand aufweisen.

Form, Länge, Eintritts- und Austrittswinkel sowie Eintritts- und Austrittsradius der Leitschaufeln können - bezüglich der Verdichterachse - in axialer Richtung wie auch in Umfangsrichtung für alle Leitschaufeln gleich oder für einige oder alle Leitschaufeln unterschiedlich sein.

Solche erfindungsgemäss unregelmässig ausgebildete Diffusoren können in ein- oder mehrstufiger Form ausgebildet sein, wobei bei mehreren Stufen diese in radialer Richtung hintereinander, also konzentrisch bezüglich der Verdichterachse, angeordnet sind.

Weitere Vorteile ergeben sich aus den abhängigen Ansprüchen.

### Kurze Beschreibung der Zeichnungen

Nachfolgend werden anhand der Figuren Ausführungsformen des erfindungsgemäss ausgebildeten Diffusors eines Radialverdichters beschrieben. Dabei zeigt:
- Fig. 1: einen Schnitt entlang der Verdichterachse durch einen Radialverdichter mit einem beschaufelten Diffusor,
- Fig. 2: einen Schnitt senkrecht zur Verdichterachse durch eine erste Ausführungsform eines erfindungsgemäss ausgebildeten Diffusors mit unregelmässig angeordneten Leitschaufeln,
- Fig.3: einen Schnitt senkrecht zur Verdichterachse durch eine zweite Ausführungsform eines erfindungsgemäss ausgebildeten Diffusors mit in Umfangsrichtung alternierenden Winkelabständen zwischen den jeweils benachbart zueinander angeordneten Leitschaufel, und
- Fig. 4: eine einzelne Leitschaufel eines Diffusors nach einer der vorangehenden Figuren. Weg zur Ausführung der Erfindung

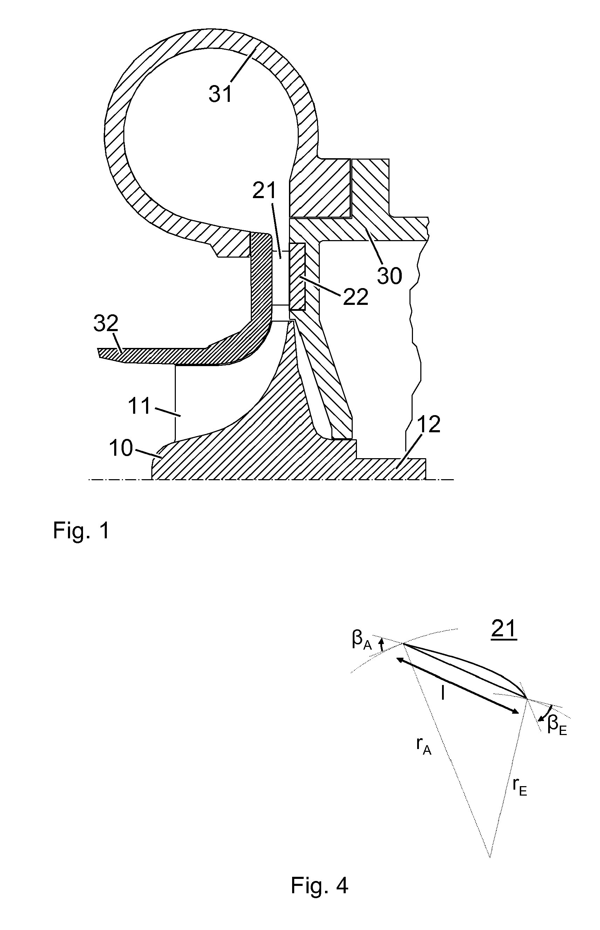

Fig. 1 zeigt den Verdichterteil eines Abgasturboladers im Schnitt durch die Wellenachse. Der Verdichter umfasst ein auf der Welle 12 angeordnetes Verdichterrad, welches eine Nabe 10 und darauf angeordneten Laufschaufeln 11 umfasst. Die Laufschaufeln können in Haupt- und Zwischenschaufeln unterteilt sein, wobei sich die Hauptschaufeln über dich gesamte Länge des von der Nabe und dem angrenzenden Gehäuseteils begrenzten Strömungskanals erstrecken, während die Zwischenschaufeln in der Regel verkürzt ausgebildet sind und eine zurückversetzte Eintrittskante aufweisen. Dabei können eine oder mehrere Zwischenschaufeln pro Hauptschaufel angeordnet sein. Das Verdichterrad ist im Verdichtergehäuse angeordnet, welches in der Regel mehrere Teile umfasst, etwa das Spiralgehäuse 31 und das Eintrittsgehäuse 32. Zwischen dem Verdichter und der nicht dargestellten Turbine befindet sich das Lagergehäuse 30, welches die Lagerung der Welle beinhaltet. Der Bereits erwähnte Strömungskanal im Bereich des Verdichters wird durch das Verdichtergehäuse begrenzt. Im Bereich des Verdichterrades übernimmt die Nabe des Verdichterrades die radial innere Begrenzung, wobei die Laufschaufeln des Verdichterrades im Strömungskanal angeordnet sind. In Strömungsrichtung des zu verdichtenden Mediums stromab des Verdichterrades ist der Diffusor angeordnet. Der Diffusor dient, wie eingangs erwähnt, der Verlangsamung der durch das Verdichterrad beschleunigten Strömung. Dies erfolgt einerseits durch die Leitschaufeln 21 des Diffusors, andererseits durch das Spiralgehäuse, von wo aus das verdichtete Medium den Brennkammern einer Brennkraftmaschine zugeführt wird. Die Leitschaufeln des Diffusors sind ein- oder beidseitig des Strömungskanals mit einer Diffusor-Wand 22, einem Gehäuseteil, verbunden.

Der erfindungsgemässe Diffusor weist mehrere Leitschaufeln auf. Die Leitschaufeln weisen unterschiedliche Winkelabstände voneinander auf. Als Winkelabstand im Sinne dieser Anmeldung wird der Winkel zwischen den Eintrittskanten zweier benachbart zueinander angeordneten Leitschaufeln bezeichnet. Optional kann als Winkelabstand auch der Winkel zwischen zwei anderen, sich entsprechenden Punkten zweier benachbart zueinander angeordneter Leitschaufeln bezeichnet werden, dann etwa, wenn die Leitschaufeln unterschiedlich ausgebildete Eintrittswinkel aufweisen, oder die Eintrittskanten sich auf unterschiedlichen Radien befinden. In diesem Fall kann als Winkelabstand etwa der Winkel zwischen den Austrittskanten oder der Winkel zwischen den Profilmittelpunkten bezeichnet werden.

Erfindungsgemäss sind die Winkelabstände zwischen benachbart zueinander angeordneten Leitschaufeln nicht über den gesamten Umfang identisch. Dabei gibt es mehrere Möglichkeiten, Diffusoren mit variierenden Winkelabständen zwischen den Leitschaufeln zu realisieren:

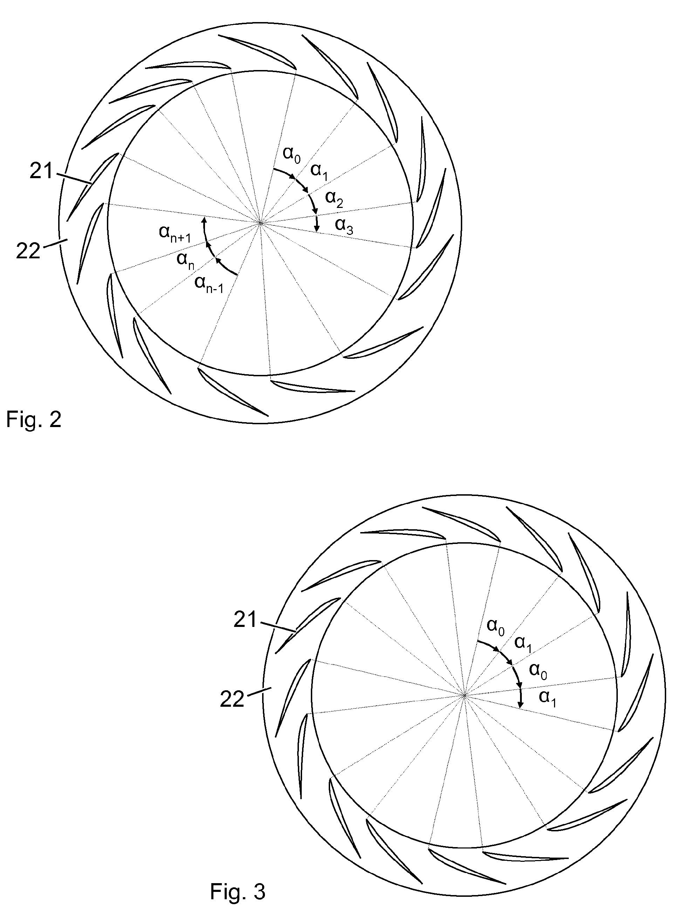

In einer ersten Ausführungsform gemäss Fig. 2 sind die Winkelabstände αₓ für alle Paare von benachbart zueinander angeordneten Leitschaufeln 21 des Diffusors unterschiedlich, das heisst keine zwei der sechzehn Winkelabständen zwischen den sechzehn Leitschaufelpaaren sind identisch. Die Werte für die einzelnen Winkelabstände der beispielhaft dargestellten Ausführungsform nach Fig. 2 können der folgenden Tabelle entnommen werden:

**Tabelle 1 - Winkelabstände Fig. 2**

| | |
|---|---|
| α₀ | 25° |
| α₁ | 21° |
| α₂ | 23° |
| α₃ | 17° |
| | 20° |
| | 29° |
| | 28° |
| | 27° |
| αₙ₋₁ | 30° |
| αₙ | 18° |
| αₙ₊₁ | 26° |
| | 19° |
| | 22° |
| | 16° |
| | 15° |
| | 24° |

Die unterschiedlichen Winkelabstände sind, wie der Tabelle entnommen werden kann, im dargestellten Beispiel unregelmässig auf alle Paare von Leitschaufeln verteilt. Alternativ könnten die Winkelabstände auch regelmässig in eine Umfangsrichtung zu- bzw. abnehmen, oder erst zu- und dann wieder abnehmen. Besonders vorteilhafte Ergebnisse können erzielt werden, wenn die Winkelabstände einer harmonischen Funktion, beispielsweise der Sinusfunktion, folgend grösser und kleiner werden.

In einer zweiten Ausführungsform gemäss Fig. 3 sind zwei Winkelabstände α₀ und α₁ auf die Paare von Leitschaufeln entlang dem Umfang alternierend verteilt. Die Werte für die einzelnen Winkelabstände der beispielhaft dargestellten Ausführungsform können wiederum der folgenden Tabelle entnommen werden:

**Tabelle 2 - Winkelabstände Fig. 3**

| | |
|---|---|
| α₀ | 25° |
| α₁ | 20° |

Weitere, nicht dargestellte Ausführungsformen sind ebenfalls möglich. Dabei können beispielsweise alle Winkelabstände bis auf einen oder einige wenige identisch sein. Es können Gruppen von identischen Winkelabständen gebildet werden. Diese Paarungen von Leitschaufeln mit identischen Winkelabständen können aneinander gereiht oder voneinander getrennt angeordnet sein.

Bei Diffusoren mit Leitschaufeln mit unterschiedlichen Winkelabständen konnte anhand von Messungen eine Reduktion der Resonanzschwingungen von bis zu 50 Prozent gegenüber einem regelmässig beschaufelten Diffusor nachgewiesen werden.

Optional können sich die einzelnen Leitschaufeln des Diffusors in Form, Länge, Eintritts- und Austrittswinkel sowie Eintritts- und Austrittsradius voneinander unterscheiden, um zusätzliche Ungleichheiten in den Diffusor einzubringen. Die unterschiedliche Ausbildung kann dabei sowohl in axialer Richtung (bezüglich der Verdichterachse), also in Richtung der Schaufelhöhe, wie auch in Umfangsrichtung erfolgen. Dabei können alle oder nur einige wenige Leitschaufeln unterschiedlich geformt oder angeordnet sein.

Solche erfindungsgemäss unregelmässig ausgebildete Diffusoren können in ein- oder mehrstufiger Form ausgebildet sein, wobei bei mehreren Stufen diese in radialer Richtung hintereinander, also konzentrisch bezüglich der Verdichterachse, angeordnet sind.

Die Grösse der unterschiedlichen Winkelabstände sowie deren Verteilung entlang dem Umfang können auf das asymmetrisch ausgebildete Spiralgehäuse (31) stromab der Leitschaufeln ausgerichtet sein. Die Winkelabstände können beispielsweise entlang dem Umfang analog zum Radius des Spiralgehäuses zunehmen. Oder dasjenige Leitschaufelpaar, welches im Bereich des Spiralzungenanfangs angeordnet ist, kann einen von den übrigen Leitschaufelpaaren unterschiedlichen Winkelabstand aufweisen.

### Bezugszeichenliste

- 10: Verdichterrad (Nabe)
- 11: Verdichterlaufschaufeln
- 12: Welle
- 21: Leitelement des Diffusors (Leitschaufel)
- 22: Wand des Diffusors
- 31: Spiralgehäuse
- 32: Eintrittsgehäuse
- 33: Lagergehäuse
- αₓ: Winkelabstand zwischen zwei Diffusor-Leitschaufeln
- β_{A}: Austrittswinkel der Diffusor-Leitschaufel
- β_{E}: Eintrittswinkel der Diffusor-Leitschaufel
- r_{A}: Austrittsradius der Diffusor-Leitschaufel
- r_{E}: Eintrittsradius der Diffusor-Leitschaufel
- I: Länge der Diffusor-Leitschaufel

## Patentansprüche

1. Abströmbereich eines Radialverdichters, umfassend ein in Umfangsrichtung asymmetrisch ausgebildetes Spiralgehäuse (31) sowie einen Diffusor mit mehreren, in Umfangsrichtung verteilt angeordneten Leitelementen (21), **dadurch gekennzeichnet, dass** sich der Winkelabstand (α₀) zweier benachbart zueinander angeordneter Leitelemente (21) unterscheidet vom Winkelabstand (α₁) zweier anderer benachbart zueinander angeordneter Leitelemente (21).

2. Abströmbereich eines Radialverdichters nach Anspruch 1, wobei mehrere Paare von jeweils benachbart zueinander angeordneten Leitelementen (21) einen anderen Winkelabstand aufweisen als die übrigen, jeweils benachbart zueinander angeordneten Leitelemente.

3. Abströmbereich eines Radialverdichters nach Anspruch 2, wobei mindestens zwei Paare von jeweils benachbart zueinander angeordneten Leitelementen einen ersten Winkelabstand (α₀) aufweisen und zumindest zwei andere Paare von jeweils benachbart zueinander angeordneten Leitelementen einen, vom ersten verschiedenen, zweiten Winkelabstand (α₁) aufweisen.

4. Abströmbereich eines Radialverdichters nach Anspruch 3, wobei mehrere Paare von jeweils benachbart zueinander angeordneten Leitelementen jeweils den gleichen Winkelabstand (α₀, α₁) aufweisen.

5. Abströmbereich eines Radialverdichters nach Anspruch 3 oder 4, wobei sich die Paare mit jeweils gleichen Winkelabständen aus unterschiedlichen Leitelementen zusammensetzen und beabstandet voneinander angeordnet sind.

6. Abströmbereich eines Radialverdichters nach Anspruch 2, wobei jedes Paar von benachbart zueinander angeordneten Leitelementen einen anderen Winkelabstand aufweist als die übrigen, jeweils benachbart zueinander angeordneten Leitelemente.

7. Abströmbereich eines Radialverdichters nach einem der Ansprüche 2 bis 6, wobei die Winkelabstände zwischen jeweils benachbart zueinander angeordneten Leitelementen einer harmonischen Funktion folgend entlang dem Umfang verteilt sind.

8. Abströmbereich eines Radialverdichters nach einem der vorangehenden Ansprüche, wobei sich zumindest ein Leitelement in der Länge (I) in Strömungsrichtung und/oder in der Form unterscheidet von den anderen Leitelementen.

9. Abströmbereich eines Radialverdichters nach einem der vorangehenden Ansprüche, wobei zumindest ein Leitelement einen unterschiedlichen Eintritts- (β_{E}) und/ oder Austrittswinkel (β_{A}) und/ oder einen unterschiedlichen Eintritts- (r_{E}) und/ oder Austrittsradius (r_{A}) aufweist als die anderen Leitelemente.

10. Abgasturbolader, **gekennzeichnet durch** einen Radialverdichter mit einem Abströmbereich nach einem der vorangehenden Ansprüche.
